# EUROPÄISCHE PATENTANMELDUNG

(11) **EP 4 417 957 A1**
(43) Veröffentlichungstag der Anmeldung: **21.08.2024**
(21) Anmeldenummer: 24157834.3
(22) Anmeldetag: 15.02.2024
(51) Int. Cl.: G01L 25/00, G01L 1/20, G01L 1/22, G01L 19/02

(54) **SCHALTUNGSANORDNUNG ZUR ANSTEUERUNG WENIGSTENS EINES STRESSSENSORS UND STRESSKARTIERUNGSSYSTEM**

(30) Priorität: 17.02.2023 DE 102023103998
(71) Anmelder: Technische Universität Hamburg-Harburg, 21073 Hamburg (DE); Albert-Ludwigs-Universität Freiburg, 79098 Freiburg (DE)
(72) Erfinder: Allinger, Kim, 20257 Hamburg (DE); Bahr, Andreas, 21218 Seevetal (DE); Kuhl, Matthias, 79194 Gundelfingen (DE)
(74) Vertreter: Gerstein, Hans Joachim

(57) **Zusammenfassung**

Die Erfindung betrifft eine Schaltungsanordnung zur Ansteuerung wenigstens eines Stresssensors, wobei die Schaltungsanordnung eine Auswerteschaltung hat, die zur Ermittlung eines Sensorsignals des Stresssensors eingerichtet ist, das eine vom Stresssensor detektierte mechanische Spannung am Einbauort des Stresssensors repräsentiert. Die Erfindung betrifft außerdem ein Stresskartierungssystem mit einer Vielzahl von Stresssensoren und einer derartigen Schaltungsanordnung.

## Beschreibung

Die Erfindung betrifft eine Schaltungsanordnung zur Ansteuerung wenigstens eines Stresssensors, wobei die Schaltungsanordnung eine Auswerteschaltung hat, die zur Ermittlung eines Sensorsignals des Stresssensors eingerichtet ist, das eine vom Stresssensor detektierte mechanische Spannung am Einbauort des Stresssensors repräsentiert. Die Erfindung betrifft außerdem ein Stresskartierungssystem mit einer Vielzahl von Stresssensoren und einer derartigen Schaltungsanordnung.

Ein solcher Stresssensor dient zur messtechnischen Erfassung mechanischer Spannungen. Soweit nachfolgend der Begriff "Stress" gebraucht wird, bezieht sich dies somit auf mechanische Spannungen.

Die Messung mechanischer Spannungen und deren räumliche Verteilung bietet eine Vielzahl an Möglichkeiten für rückgekoppelte Systeme, vor allem im Bereich der Robotik. Kompakte Complementary-Metal-Oxide-Semiconductor (CMOS) Sensoren ermöglichen die Integration von Sensorik und dafür spezifisch ausgelegten Ausleseschaltungen auf einem einzelnen Chip. Bei geringer Sensorgröße kann dabei eine Vielzahl von Sensoren auf kleinster Fläche untergebracht werden, um eine möglichst hohe räumliche Auflösung zu erhalten.

Die Breite an Anwendungsgebieten für verfügbare Sensorsysteme basierend auf integrierten CMOS Sensoren wird limitiert durch die benötigte Sensitivität bzw. den Messbereich sowie den Initialstress, der z.B. durch den Aufbau und die Verbindungstechnik eingebracht werden kann. Vor allem bei hohen Sensitivitätsanforderungen kann dieser Initial- bzw. Offsetstress zur Sättigung des Stresssensors führen und somit dessen Funktionalität ungünstig beeinflussen.

Der Erfindung liegt die Aufgabe zugrunde, eine Lösung für das erwähnte Problem des Initialstress anzugeben.

Diese Aufgabe wird bei einer Schaltungsanordnung der eingangs genannten Art dadurch gelöst, dass die Schaltungsanordnung wenigstens eine Offset-Kompensationsschaltung hat, die dazu eingerichtet ist, durch Beaufschlagung des wenigstens einen Stresssensors oder wenigstens eines Teils der Auswerteschaltung des Stresssensors mit einem elektrischen Kompensationssignal den Nullpunkt des Sensorsignals des wenigstens einen Stresssensors auf einen gewünschten Wert einzustellen. Durch eine solche Offset-Kompensation kann der Stresssensor immer mit einem optimalen Erfassungsbereich betrieben werden. Es kann eine dynamisch anpassbare Sensitivität und dynamisch anpassbare Kompensation der durch die Einbringung des Stresssensors in die Anwendung entstandenen mechanischen Spannungen realisiert werden. Auf diese Weise kann eine erheblich größere Breite an Anwendungsfeldern mit solchen Stresssensoren abgedeckt werden. Ein solches System bietet sowohl Vorteile im Bereich Time-to-Market, da keine Neuentwicklung des Sensorchips benötigt wird, als auch bei den Herstellungskosten, da auch im Bereich der CMOS Fertigung die Kosten pro Chip und Menge in gleichem Maße skalieren.

Durch die Erfindung kann insbesondere eine rückgekoppelte Ausleseschaltung für Stresssensoren, insbesondere CMOS integrierte Stresssensoren, mit einstellbarer Sensitivität und analoger Offset-Kompensation zur Anpassung des dynamischen Messbereichs basierend auf einstellbaren, differentiellen Rückstellströmen bereitgestellt werden.

Gemäß einer vorteilhaften Ausgestaltung der Erfindung ist vorgesehen, dass die Offset-Kompensationsschaltung dazu eingerichtet ist, durch Beaufschlagung des wenigstens einen Stresssensors oder wenigstens eines Teils der Auswerteschaltung des Stresssensors mit dem elektrischen Kompensationssignal den Nullpunkt des Sensorsignals des wenigstens einen Stresssensors in einen Bereich einzustellen, der wesentlich von einem Sättigungspunkt des Sensorsignals entfernt ist. Auf diese Weise können unerwünschte Verschlechterungen in der Sensierung durch den Stresssensor aufgrund von Sättigungseffekten vermieden werden. Beispielsweise kann durch das Kompensationssignal der Nullpunkt des Sensorsignals im Wesentlichen in die Mitte des Messbereichs eingestellt werden.

Gemäß einer vorteilhaften Ausgestaltung der Erfindung ist vorgesehen, dass die Offset-Kompensationsschaltung dazu eingerichtet ist, im laufenden Messbetrieb des wenigstens einen Stresssensors automatisch iterativ den Nullpunkt des Sensorsignals des wenigstens einen Stresssensors anzupassen, um eine Sättigung des Sensorsignals im laufenden Messbetrieb zu verhindern. Dies hat den Vorteil, dass auch bei sich im Betrieb des Stresssensors bzw. der Anlage, in der der Stresssensor verbaut ist, auftretenden Veränderungen des Sensoroffsets automatisch eine Anpassung erfolgt, sodass eine Sättigung des Sensorsignals vermieden wird und dementsprechend im laufenden Betrieb permanent eine zuverlässige Erfassung der Stresssignale möglich ist.

Gemäß einer vorteilhaften Ausgestaltung der Erfindung ist vorgesehen, dass der wenigstens eine Stresssensor als Anordnung wenigstens zweier miteinander verschalteter Sensorelemente ausgebildet ist, die jeweils wenigstens zwei miteinander verschaltete Transistoren haben. Die Transistoren können insbesondere als CMOS-Transistoren ausgebildet sein.

Gemäß einer vorteilhaften Ausgestaltung der Erfindung ist vorgesehen, dass die Schaltungsanordnung eine differentielle Stromspiegelschaltung hat, die mit dem wenigstens einen Stresssensor, insbesondere mit den wenigstens zwei Sensorelementen, verschaltet ist. Durch solche differentiellen Stromspiegelschaltungen kann die Signalstärke der Sensorsignale der Stresssensoren maximiert werden. Die differentielle Stromspiegelschaltung kann z.B. einen dem einen Sensorelement zugeordneten Stromspiegel und einen dem anderen Sensorelement zugeordneten Stromspiegel aufweisen.

Gemäß einer vorteilhaften Ausgestaltung der Erfindung ist vorgesehen, dass die differentielle Stromspiegelschaltung über eine steuerbare Analog-Multiplexeranordnung mit dem wenigstens einen Stresssensor, insbesondere mit den wenigstens zwei Sensorelementen, verschaltet ist. Auf diese Weise kann mit geringem Aufwand das Vorzeichen des differentiellen Stroms der differentiellen Stromspiegelschaltung angepasst werden. Dies ermöglicht die Kompensation von positiven und negativen differentiellen Normalspannungen in einer Anwendung.

Gemäß einer vorteilhaften Ausgestaltung der Erfindung ist vorgesehen, dass die Offset-Kompensationsschaltung dazu eingerichtet ist, als elektrisches Kompensationssignal differentielle Stromsignale in die differentielle Stromspiegelschaltung, insbesondere in mit dem wenigstens einen Stresssensor verbundene Ausgangsknoten der differentiellen Stromspiegelschaltung, einzuspeisen. Auf diese Weise können die Sensorelemente symmetrisch mit elektrischen Kompensationssignalen, insbesondere Kompensationsströmen beaufschlagt werden. Hierzu kann die Offset-Kompensationsschaltung z.B. einen differentiellen Digital-Analog-Wandler haben, der an zwei Ausgängen die differentiellen Stromsignale bereitstellt.

Gemäß einer vorteilhaften Ausgestaltung der Erfindung ist vorgesehen, dass die Schaltungsanordnung eine Drahtlos-Datenübertragungseinheit hat, wobei die Schaltungsanordnung dazu eingerichtet ist, anhand von über die Drahtlos-Datenübertragungseinheit empfangenen Vorgabewerten mittels der Offset-Kompensationsschaltung den Nullpunkt des Sensorsignals des wenigstens einen Stresssensors auf einen jeweiligen Vorgabewert einzustellen. Dies hat den Vorteil, dass eine gezielte Offset-Kompensation auch bei bereits in einer Anwendung verbauten Stresssensoren leicht möglich ist, da die Vorgabewerte drahtlos über die Drahtlos-Datenübertragungseinheit eingespeist werden können.

Die eingangs genannte Aufgabe wird außerdem gelöst durch ein Stresskartierungssystem mit einer Vielzahl von Stresssensoren und wenigstens einer Schaltungsanordnung der zuvor erläuterten Art, die zur Ansteuerung der Stresssensoren eingerichtet ist, wobei die Schaltungsanordnung eine Auswerteschaltung hat, die zur Ermittlung eines Sensorsignals jedes Stresssensors eingerichtet ist, das eine vom Stresssensor detektierte mechanische Spannung am Einbauort des Stresssensors repräsentiert. Die Schaltungsanordnung hat wenigstens eine Offset-Kompensationsschaltung, die dazu eingerichtet ist, durch Beaufschlagung des jeweiligen Stresssensors oder wenigstens eines Teils der Auswerteschaltung jeweiligen Stresssensors mit einem elektrischen Kompensationssignal den Nullpunkt des Sensorsignals des jeweiligen Stresssensors auf einen gewünschten Wert einzustellen. Auch hierdurch können die zuvor erläuterten Vorteile realisiert werden. Das Stresskartierungssystem kann z.B. eine größere Zahl von Stresssensoren beinhalten, z.B. 32 Stresssensoren.

Die Erfindung wird nachfolgend anhand von Ausführungsbeispielen unter Verwendung von Zeichnungen näher erläutert.

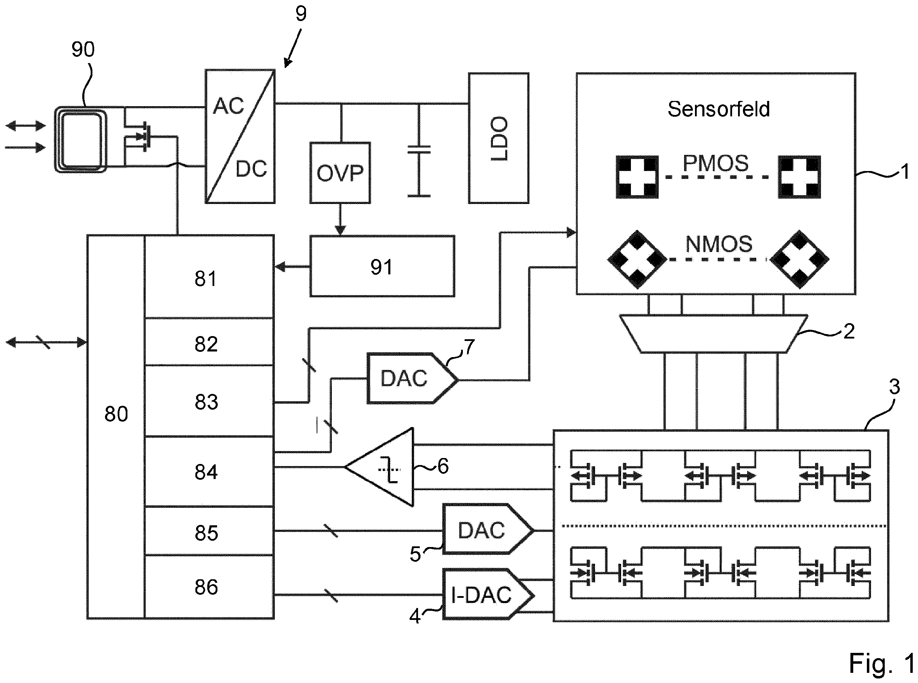

Es zeigen
- Figur 1: ein funktionales Blockschaltbild eines Stresskartierungssystems,
- Figur 2: eine schaltungstechnische Realisierung des Auslesekonzepts der Stresssensoren,
- Figur 3: die Ansteuerung der Stresssensoren über Stromspiegelschaltungen,
- Figur 4: eine Schaltung zur Anpassung des Spiegelverhältnisses und gemessene, daraus resultierende Sensitivitäten.

Das Stresskartierungssystem weist ein Sensorfeld 1 auf, das mehrere Stresssensoren 10 enthalten kann, insbesondere PMOS-Stresssensoren und NMOS-Stresssensoren. Die Verwendung vier gleichgearteter MOS Transistoren als sensitive Elemente ermöglicht die Messung von differentiellen Normalspannungen sowie Scherspannungen je nach FET-Typ und deren Orientierung in der Waferebene. Durch die geringe Größe der einzelnen CMOS Sensoren lässt sich eine Vielzahl auf einem einzelnen Chip unterbringen

Das Sensorfeld 1 ist über eine Analog-Multiplexeranordnung 2 mit einer differentiellen Stromspiegelschaltung 3 verbunden. Durch Zuführung von elektrischen Signalen über Digital-Analog-Wandler 4, 5 kann die Stromspiegelschaltung 3 beeinflusst werden. Dabei kann durch den Digital-Analog-Wandler 5 die Messsensitivität der Stresssensoren 10 beeinflusst werden. Zusätzlich kann über den Digital-Analog-Wandler 4 ein Offset-Kompensationssignal zur Einstellung des Nullpunkts des Sensorsignals der Stresssensoren in die Stromspiegelschaltung 3 eingespeist werden.

Über einen Komparator 6 kann ein Auslesen der Signale der Stresssensoren erfolgen. Über einen Digital-Analog-Wandler 7 können die Stresssensoren beispielsweise basierend auf einer sukzessiven Approximation mit der benötigten Rückstellspannung beaufschlagt werden, um den differentiellen Sensorausgang anzugleichen.

Die Digital-Analog-Wandler 4, 5, 7 werden von einer Steuereinheit 8 angesteuert, z.B. einer mit einer integrierten Prozessoreinheit 80 gesteuerten Steuereinheit. Die Ansteuerung der Digital-Analog-Wandler 4, 5, 7 erfolgt über Blöcke 84, 85, 86. Die Steuereinheit 8 liest im Block 84 auch das Sensorsignal vom Komparator 6 ein. Zusätzlich kann die Steuereinheit 8 mittels des Blocks 83 über Adressleitungen den jeweils auszulesenden Stresssensor 10 des Sensorfelds 1 auswählen.

Des Weiteren weist das Stresskartierungssystem eine Stromversorgungsschaltung 9 auf. Die Stromversorgungsschaltung 9 kann beispielsweise durch drahtlose Energieübertragung über eine Spule 90 mit Energie versorgt werden. Zusätzlich kann über die Spule 90 auch eine Datenkommunikation erfolgen, z.B. eine NFC-Kommunikation. Die NFC-Signale können über einen Demodulator 91 einem Kommunikationsblock 81 der Steuereinheit 8 zugeführt werden.

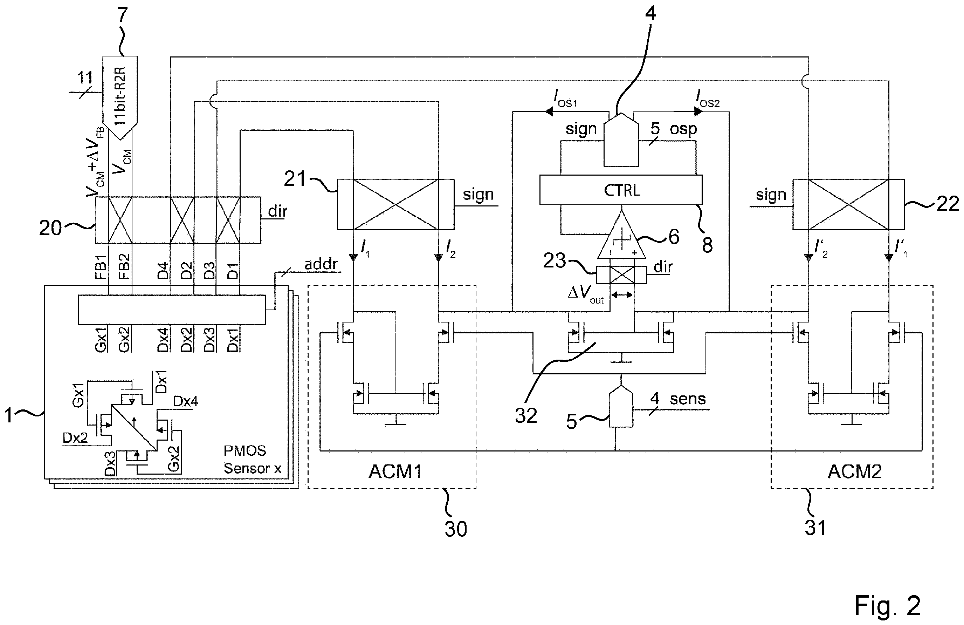

Die Figur 2 verdeutlicht die Ansteuerung der Sensoren des Sensorfelds 1 mit dem Digital-Analog-Wandler 7 über einen Multiplexer 20 als Teil der Analog-Multiplexeranordnung 2. Die jeweiligen Transistoren eines Stresssensors sind über den Multiplexer 20 mit einer ersten Stromspiegelschaltung 30 und einer zweiten Stromspiegelschaltung 31 verbunden, jeweils über Multiplexer 21, 22, die ebenfalls Teile der Analog-Multiplexeranordnung 2 sein können. Die Stromspiegelschaltungen 30, 31 sind über eine weitere Stromspiegelschaltung 32 miteinander verbunden und bilden auf diese Weise eine differentielle Stromspiegelschaltung. Über den Digital-Analog-Wandler 5 können die Stromspiegelschaltungen 30, 31 derart mit elektrischen Signalen beaufschlagt werden, dass hierdurch die Sensitivität der Stresssensoren 10 nach Wunsch eingestellt werden kann.

Über den Digital-Analog-Wandler 4, der über differentielle Ausgänge verfügt, können in die Stromspiegelschaltungen 30, 31 jeweilige differentielle Ströme als elektrische Kompensationssignale I_{OS1} und I_{OS2} eingespeist werden, um hierdurch den Nullpunkt des Sensorsignals eines jeweiligen Stresssensors 10 auf einen gewünschten Wert einzustellen.

Erkennbar ist ferner, dass der Komparator 6 über einen weiteren Multiplexer 23 als Teil der Analog-Multiplexeranordnung 2 mit den Stromspiegelschaltungen 30, 31 zum Auslesen des Sensorsignals verbunden ist.

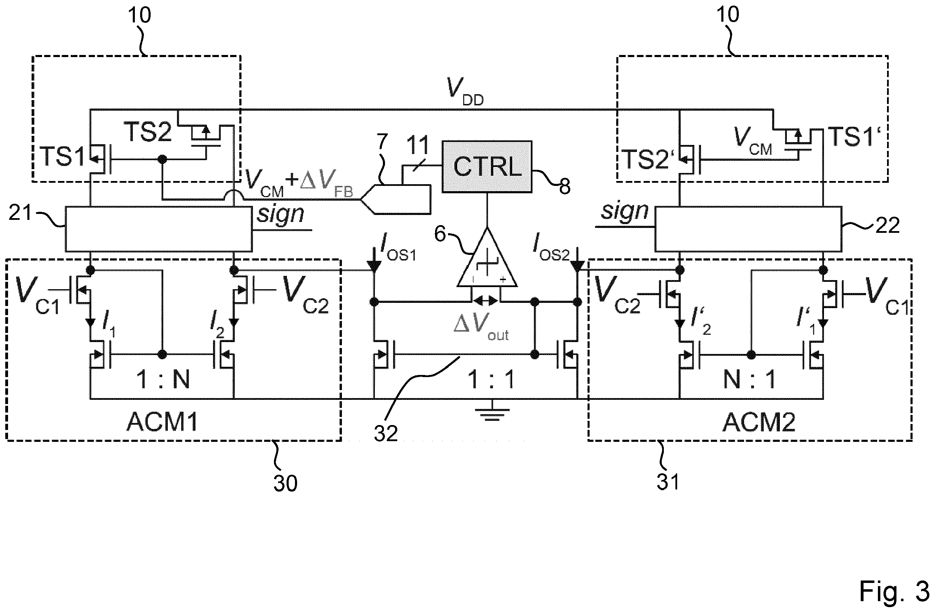

Anhand der Figur 3 soll die Schaltung für die sukzessive Approximation des Sensorsignals des jeweiligen Stresssensors 10 erläutert werden. Die Steuereinheit 8 wertet das Signal vom Komparator 6 aus. Je nach Signal wird über den Digital-Analog-Wandler 7 ein Ansteuersignal in die Transistorschaltung eines Stresssensors 10 eingespeist, um die benötigte Rückstellspannung V_{FB} gegen Null zu führen. Der Closed-Loop Auslesevorgang eines Stresssensors basiert dann auf einer sukzessiven Approximation der benötigten Rückstellspannung VFB,um den differentiellen Sensorausgang anzugleichen. Der hierfür implementierte Digital-Analog-Konverter (DAC) 7 weist eine Auflösung von 11 Bit auf. In Kombination mit einer Detektion des Vorzeichens durch Messung des Gleichtaktausgangs ergibt sich eine Gesamtauflösung von 12 Bit. Unter der Annahme technologieunabhängiger mechanischer Eigenschaften der sensitiven Transistoren wird eine maximal erreichbare Sensitivität von 4 kPa erwartet, wodurch der Stand der Technik um einen Faktor 3 verbessert.

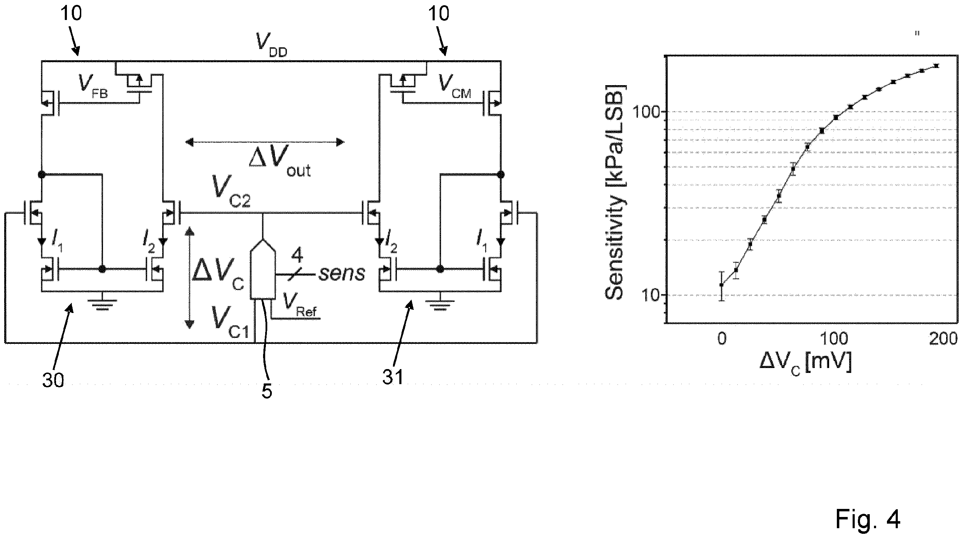

Um die Signalstärke verglichen zu State-of-the-Art Wheatstone-Brücken zu maximieren, werden die Strompfade jedes sensitiven Transistors an einen differentiellen Stromspiegel geführt (Fig. 3). Durch den Faktor N der beiden äußeren Stromspiegel 30, 31 kann sowohl der unbelastete Ruhestrom des inneren Stromspiegels 32 als auch die Sensitivität des Ausgangssignals eingestellt werden. Eine erweiterte Implementierung ist in Fig. 4 dargestellt, bei welcher mit einem 4 Bit DAC 5 die Sensitivität des Systems eingestellt werden kann, indem eine differentielle Steuerspannung an zusätzlichen Lasttransistoren angelegt wird.

Die Figur 4 verdeutlicht die Schaltung zur Anpassung des Spiegelverhältnisses N der Stromspiegel 30, 31, durch die die Sensitivität der Stresssensoren 10 eingestellt werden kann. Wie die rechts in Figur 4 wiedergegebene Sensitivitäts-Kennlinie verdeutlicht, kann die Sensitivität über einen relativ großen Bereich eingestellt werden.

Die hier vorgestellte Implementierung basiert auf vier PMOS Transistoren je Sensor, welche an zwei NMOS Stromspiegelschaltungen 30 und 31 als Lastelement angeschlossen werden (Figur 2). Deren Ausgänge sind über einen dritten, inneren Stromspiegel miteinander verbunden. Die folgenden Transistoren sind dabei wie folgt physikalisch orthogonal zueinander anzuordnen: TS1 orthogonal zu TS2, TS1' orthogonal zu TS2' sowie TS2 orthogonal zu TS2`. Dies führt unter Einfluss von differentieller Normalspannung zu einem Ungleichgewicht der Eingangsströme in den inneren Stromspiegel und somit zu einem Ausschlag der Ausgangsspannung Δ*V*ₒᵤₜ. Ziel ist es nun diese mit Hilfe des Sucessive-Approximation Algorithmus über die Rückstellspannung *V*_{FB} aus einem Digital-zu-Analog-Konverter (DAC) zu minimieren. Da durch ein positives *V*_{FB} nur eine Verringerung des Ausgangsstroms in ACM1 möglich ist, können nativ nur differentielle Normalspannungen einer Polarität kompensiert werden, abhängig von der Art der Implementierung also nur positive oder negative differentielle Normalspannungen. Um dies zu umgehen wird ein analoger Multiplexer zwischen die sensitiven Transistoren und den Laststromspiegel geschaltet. Basierend auf der Ausgangslage des Signals bei Gleichtaktansteuerung aller sensitiven Elemente kann somit das Vorzeichen des differentiellen Stroms angepasst werden. Dieses ermöglicht die Kompensation von positiven und negativen differentiellen Normalspannungen in einer Anwendung.

Das Spiegelverhältnis N der beiden Laststromspiegel definiert hierbei das Verhältnis an Rückstellspannung zu mechanischem Stress, respektive die Sensitivität und kann mit Hilfe eines weiteren DACs über die differentielle Steuerspannung Δ*V*_{C} in einem zuvor fest definierten Rahmen eingestellt werden (Figur 3, 4). Dabei ist zu beachten, dass N nach oben hin beschränkt ist und unter einem Wert von Eins liegen muss, da ansonsten eine Kompensation über *V*_{FB} nicht weiter möglich ist. Dieses Konzept erlaubt eine Einstellbarkeit der Sensitivität auch nach Fertigung des Chips im laufenden Betrieb und damit angepasst an die Anforderungen der jeweiligen Anwendung.

Mechanische Spannungen, welche durch die AVT des Chips in der Anwendungsumgebung eingebracht werden, können speziell bei hohen Sensitivitätsanforderung bereits zu einer unerwünschten Sättigung des Sensorsignals führen, ohne dass ein Nutzsignal an den Sensor anliegt. Ist dies der Fall, lässt sich der Nullpunktfehler auch nicht durch eine digitale Nachverarbeitung herausrechnen und führt somit zu einem Ausfall des Sensors. Solch eine Kompensation in integrierten Stresssensoren liegt bisher noch nicht vor. In dieser Erfindung wird die Ursache des Nullpunktfehlers in der analogen Domäne behoben und kompensiert. Hierfür kann ein differentieller Strom (siehe Figur 2 *I*_{OS1}-*I*_{OS2}) in die beiden Ausgangsknoten geführt werden. Dieser, von der eingestellten Sensitivität unabhängige Strom, erlaubt eine Verschiebung des Nullpunkts und somit analoge Kompensation von mechanischem Stress. Das Konzept lässt sich im Weiteren auch dazu nutzen, den dynamischen Messbereich (DR) zu erweitern. Hierfür wird in der laufenden Anwendung sukzessive der Nullpunkt angepasst um eine Sättigung des Ausgangssignals zu umgehen.

## Patentansprüche

1. Schaltungsanordnung zur Ansteuerung wenigstens eines Stresssensors (10), wobei die Schaltungsanordnung eine Auswerteschaltung hat, die zur Ermittlung eines Sensorsignals des Stresssensors (10) eingerichtet ist, das eine vom Stresssensor (10) detektierte mechanische Spannung am Einbauort des Stresssensors (10) repräsentiert, **dadurch gekennzeichnet, dass** die Schaltungsanordnung wenigstens eine Offset-Kompensationsschaltung (4) hat, die dazu eingerichtet ist, durch Beaufschlagung des wenigstens einen Stresssensors (10) oder wenigstens eines Teils der Auswerteschaltung des Stresssensors (10) mit einem elektrischen Kompensationssignal (I_{OS1}, I_{OS2}) den Nullpunkt des Sensorsignals des wenigstens einen Stresssensors (10) auf einen gewünschten Wert einzustellen.

2. Schaltungsanordnung nach Anspruch 1, **dadurch gekennzeichnet, dass** die Offset-Kompensationsschaltung (4) dazu eingerichtet ist, durch Beaufschlagung des wenigstens einen Stresssensors (10) oder wenigstens eines Teils der Auswerteschaltung des Stresssensors (10) mit dem elektrischen Kompensationssignal (I_{OS1}, I_{OS2}) den Nullpunkt des Sensorsignals des wenigstens einen Stresssensors (10) in einen Bereich einzustellen, der wesentlich von einem Sättigungspunkt des Sensorsignals entfernt ist.

3. Schaltungsanordnung nach Anspruch 2, **dadurch gekennzeichnet, dass** die Offset-Kompensationsschaltung (4) dazu eingerichtet ist, im laufenden Messbetrieb des wenigstens einen Stresssensors (10) automatisch iterativ den Nullpunkt des Sensorsignals des wenigstens einen Stresssensors (10) anzupassen, um eine Sättigung des Sensorsignals im laufenden Messbetrieb zu verhindern.

4. Schaltungsanordnung nach einem der vorhergehenden Ansprüche, **dadurch gekennzeichnet, dass** der wenigstens eine Stresssensor (10) als Anordnung wenigstens zweier miteinander verschalteter Sensorelemente ausgebildet ist, die jeweils wenigstens zwei miteinander verschaltete Transistoren haben.

5. Schaltungsanordnung nach einem der vorhergehenden Ansprüche, **dadurch gekennzeichnet, dass** die Schaltungsanordnung eine differentielle Stromspiegelschaltung (3) hat, die mit dem wenigstens einen Stresssensor (10), insbesondere mit den wenigstens zwei Sensorelementen, verschaltet ist.

6. Schaltungsanordnung nach Anspruch 5, **dadurch gekennzeichnet, dass** die differentielle Stromspiegelschaltung (3) über eine steuerbare Analog-Multiplexeranordnung (2) mit dem wenigstens einen Stresssensor (10), insbesondere mit den wenigstens zwei Sensorelementen, verschaltet ist.

7. Schaltungsanordnung nach einem der Ansprüche 5 bis 6, **dadurch gekennzeichnet, dass** die Offset-Kompensationsschaltung (4) dazu eingerichtet ist, als elektrisches Kompensationssignal (I_{OS1}, I_{OS2}) differentielle Stromsignale in die differentielle Stromspiegelschaltung (3), insbesondere in mit dem wenigstens einen Stresssensor (10) verbundene Ausgangsknoten der differentiellen Stromspiegelschaltung (3), einzuspeisen.

8. Schaltungsanordnung nach einem der vorhergehenden Ansprüche, **dadurch gekennzeichnet, dass** die Schaltungsanordnung eine Drahtlos-Datenübertragungseinheit (81, 90) hat, wobei die Schaltungsanordnung dazu eingerichtet ist, anhand von über die Drahtlos-Datenübertragungseinheit (81, 90) empfangenen Vorgabewerten mittels der Offset-Kompensationsschaltung (4) den Nullpunkt des Sensorsignals des wenigstens einen Stresssensors (10) auf einen jeweiligen Vorgabewert einzustellen.

9. Stresskartierungssystem mit einer Vielzahl von Stresssensoren (10) und wenigstens einer Schaltungsanordnung nach einem der vorhergehenden Ansprüche, die zur Ansteuerung der Stresssensoren (10) eingerichtet ist, wobei die Schaltungsanordnung eine Auswerteschaltung hat, die zur Ermittlung eines Sensorsignals jedes Stresssensors (10) eingerichtet ist, das eine vom Stresssensor (10) detektierte mechanische Spannung am Einbauort des Stresssensors (10) repräsentiert, **dadurch gekennzeichnet, dass** die Schaltungsanordnung wenigstens eine Offset-Kompensationsschaltung (4) hat, die dazu eingerichtet ist, durch Beaufschlagung des jeweiligen Stresssensors (10) oder wenigstens eines Teils der Auswerteschaltung jeweiligen Stresssensors (10) mit einem elektrischen Kompensationssignal (I_{OS1}, I_{OS2}) den Nullpunkt des Sensorsignals des jeweiligen Stresssensors (10) auf einen gewünschten Wert einzustellen.

10. Stresskartierungssystem nach Anspruch 9, **dadurch gekennzeichnet, dass** die Vielzahl von Stresssensoren (10) und die wenigstens eine Schaltungsanordnung zur Ansteuerung der Stresssensoren (10) als integrierte Schaltung auf einem Halbleiterchip ausgebildet ist.
